Europäisches Patentamt

European Patent Office

Office européen des brevets

(11) Veröffentlichungsnummer: **0 214 084**
A1

# EUROPÄISCHE PATENTANMELDUNG

(21) Anmeldenummer: 86730122.8

(22) Anmeldetag: 31.07.86

(51) Int. Cl.⁴: **B 01 D 53/34**
B 01 D 47/02, B 01 D 47/06

(30) Priorität: 14.08.85 DE 3529314

(43) Veröffentlichungstag der Anmeldung:
11.03.87 Patentblatt 87/11

(84) Benannte Vertragsstaaten:
AT BE CH DE FR GB IT LI LU NL SE

(71) Anmelder: Herbst, Donald, Dipl.-Ing.,
Marienplatz 11
D-1000 Berlin 45 (DE)

(72) Erfinder: Herbst, Donald, Dipl.-Ing.,
Marienplatz 11
D-1000 Berlin 45 (DE)

(74) Vertreter: Pfenning, Meinig & Partner
Kurfürstendamm 170
D-1000 Berlin 15 (DE)

(54) Vorrichtung zum Waschen von mit Verunreinigungen balasteten Gasen.

(57) Es wird eine Vorrichtung zum Waschen von mit Verunreinigungen belasteten Gasen vorgeschlagen, bei der die bei der Wäsche entstehenden Salze in der Waschflüssigkeit gelöst sind. Die Waschflüssigkeit wird in einem Kreislauf durch die Vorrichtung geführt, wobei sie in zwei miteinander verbundenen Kammern (3,4) gesammelt wird. Durch geeignete Kühlung der einen Kammer (4) weist die Waschflüssigkeit in den beiden Kammern unterschiedliche Temperaturen auf. Die die Waschflüssigkeit mit der höheren Temperatur aufnehmende Kammer (3) ist direkt in den Waschflüssigkeits-Kreislauf eingefügt. Zwischen den beiden Kammern findet ein regelmäßiger Austausch der Waschflüssigkeit statt, der zumindest so ausgestaltet ist, daß die von der Kammer mit der niedrigeren Temperatur abgegebene Waschflüssigkeit der Waschflüssigkeit mit der höheren Temperatur zugemischt wird. Auf diese Weise wird erreicht, daß die Salzkonzentration im Kreislauf immer unter dem Kristallationspunkt liegt.

Fig.1

EP 0 214 084 A1

**Beschreibung**

Vorrichtung zum Waschen von mit Verunreinigungen belasteten Gasen

Die Erfindung betrifft eine Vorrichtung gemäß dem Oberbegriff des Anspruchs 1.

Bei einer Naßreinigung von verunreinigten Gasen mit einer chemischen Umsetzung zwischen den Verunreinigungen und in der Waschflüssigkeit enthaltenen Substanzen ist man bestrebt, mit möglichst geringen Waschflüssigkeitsmengen zu arbeiten, um die Waschvorrichtung nicht zu aufwendig werden zu lassen und um das Entsorgungsvolumen und die Energieverluste klein zu halten. Dies bedeutet jedoch, daß die Waschflüssigkeit die bei der Umsetzung entstehenden Salze in starker Konzentration enthält. Die Lösungsmöglichkeit dieser Salze in Wasser ist jedoch begrenzt; so beginnt beispielsweise Ammoniumsulfat, das bei der Entschwefelung von Gasen mit Ammoniakwaser entsteht, bei etwa 40 % Gewichtsanteil im Wasser zu kristallisieren, wobei dieser Kristallisationspunkt von der Temperatur des Wassers abhängig ist.

Eine zu starke Salzkonzentration führt somit zur Ausscheidung von Kristallen, die im Kreislauf der Waschvorrichtung Verstopfungen hervorrufen können. Die hiermit verbundenen Schwierigkeiten werden noch dadurch verstärkt, daß bei der Reinigung der in der Regel heißen Gase Wasser bei der Berührung mit den Gasen im Wascher verdampft, wodurch die Salzkonzentration noch erhöht wird.

Bekannte Waschvorrichtung haben daher Absalzeinrichtungen, deren Funktion darin besteht, daß sie die Salzkonzentration der Waschflüssigkeit in einem sicheren Abstand vom Kristallisationspunkt halten. Diese Absalzeinrichtungen benötigen ein Meßgerät zur Ermittlung des Salzgehaltes und eine von diesem gesteuerte Vorrichtung zur Zufuhr frischer Waschflüssigkeit beziehungsweise Entnahme stark salzhaltiger Waschflüssigkeit. Hierdurch kann erreicht werden, daß der Salzgehalt der zirkulierenden Waschflüssigkeit stets unterhalb des Kristallisationspunktes liegt. Diese Absalzeinrichtung ist jedoch relativ aufwendig.

Es ist daher die Aufgabe der vorliegenden Erfindung, die bekannten Vorrichtungen zum Waschen von mit Verunreinigungen belasteten Gasen, bei denen die bei der Wäsche entstehenden Salze in der Waschflüssigkeit gelöst sind, die in einem Kreislauf durch die Vorrichtungen geführt wird, in der Weise zu verbessern, daß auch ohne eine besondere Absalzeinrichtung, in der der Salzgehalt regelmäßig gemessen werden muß, der Salzgehalt der Waschflüssigkeit stets in ausreichendem Abstand unterhalb des Kristallisationspunktes gehalten wird. Diese Aufgabe wird erfindungsgemäß durch die im kennzeichnenden Teil des Anspruchs 1 enthaltenen Merkmale gelöst.Vorteilhafte Ausbildungen der erfindungsgemäßen Vorrichtung ergeben sich aus den Unteransprüchen.

Die Erfindung zeichnet sich dadurch aus, daß zwei miteinander verbundene Kammern vorgesehen sind, in denen die Waschflüssigkeit unterschiedliche Temperaturen besitzt, daß ein regelmäßiger Austausch der Waschflüssigkeit zwischen den beiden Kammern zumindest derart, daß die von der Kammer mit der niedrigeren Temperatur abgegebene Waschflüssigkeit der Waschflüssigkeit mit der höheren Temperatur zugemischt wird, durchführbar ist, und daß die die Waschflüssigkeit mit der höheren Temperatur enthaltende Kammer direkt in den Kreislauf eingefügt ist. In der Kammer mit der niedrigeren Temperatur kann daher das in der Waschflüssigkeit enthaltene Salz teilweise kristallisieren, wenn die Salzkonzentration den für die in dieser Kammer herrschende Temperatur geltenden Kristallisationspunkt überschreitet. Damit verringert sich die Salzkonzentration in der Waschflüssigkeit, so daß die Zumischung der kühleren Waschflüssigkeit zu der Waschflüssigkeit mit der höheren Temperatur insgesamt eine Herabsetzung der Salzkonzentration der zirkulierenden Waschflüssigkeit bewirkt. Ammoniumsulfat wird zum Beispiel in Wasser mit einer Temperatur von 50° C bis zu einer Konzentration von etwa 42 % gelöst, während in Wasser mit einer Temperatur von 30° C nur eine Lösung bis zu 38 % möglich ist. Durch geeignete Bemessung des Temperaturunterschiedes zwischen den beiden Kammern und der Durchflußmenge der Waschflüssigkeit durch die Kammer mit der niedrigeren Temperatur kann somit erreicht werden, daß die Salzkonzentration der zirkulierenden Waschflüssigkeit in sicherem Abstand vom Kristallisationspunkt bleibt, der für die Temperatur der zirkulierenden Waschflüssigkeit, die der Temperatur in der wärmeren der beiden Kammern entspricht, gilt. Die sich in der kühleren Kammer absetzenden Kristalle werden in geeigneter Weise, beispielsweise durch Absaugen, entfernt.

Der Temperaturunterschied zwischen beiden Kammern kann beispielsweise dadurch erreicht werden, daß die die Waschflüssigkeit mit der höheren Temperatur enthaltende Kammer gegen die Umgebung wärmeisoliert und die die Waschflüssigkeit mit der niedrigeren Temperatur enthaltende Kammer nicht wärmeisoliert sind. Weiterhin kann die die Waschflüssigkeit mit der niedrigeren Temperatur enthaltende Kammer mit einer Kühlvorrichtung versehen sein. Schließlich kann auch die Waschflüssigkeit in der Kammer mit der niedrigeren Temperatur der Einwirkung eines Kühlluftstromes ausgesetzt sein. Diese unterschiedlichen Maßnahmen zur Erzielung eines Temperaturunterschiedes zwischen den beiden Kammern können einzeln oder auch in beliebiger Weise kombiniert angewendet werden.

Die Zuführung der Waschflüssigkeit zu der Kammer mit der niedrigeren Temperatur kann entweder derart vorgenommen werden, daß ein Teil der zum Waschen verwendeten Flüssigkeit direkt in die Kammer mit der höheren Temperatur und der restliche Teil direkt in die Kammer mit der niedrigeren Temperatur geleitet werden, oder so, daß der Einlaß der Kammer mit der niedrigeren Temperatur mit einem Auslaß der Kammer mit der höheren Temperatur verbunden ist. Besonders vorteilhaft ist es, wenn der Einlaß und der Auslaß der die Waschflüssigkeit mit der niedrigeren Temperatur enthaltenden Kammer durch zwei konzentrische Rohre gebildet sind, die einen Gegenstrom-Wärmetauscher darstellen. Auf diese Weise wird die in diese Kammer hineingeführte Waschflüssigkeit durch die herausgeführte Flüssigkeit schon etwas abgekühlt, während umgekehrt die herausgeführte Flüssigkeit durch die hereingeführte Flüssigkeit erwärmt wird. Beide Wirkungen tragen zur Erhöhung des Temperaturunterschiedes zwischen den beiden Kammern bei.

Die mit den Salzkristallen aus der Kammer mit der niedrigeren Temperatur entnommene Waschflüssigkeit wird vorzugsweise nach der Befreiung von den Salzkristallen wieder in den Kreislauf zurückgeführt. Hierdurch kann das Entsorgungsvolumen der Waschvorrichtung wesentlich verkleinert werden.

Die Erfindung wird im folgenden anhand von in den Figuren dargestellten Ausführungsbeispielen näher erläutert. Es zeigen:

Fig. 1 eine Gegenstromwaschvorrichtung mit einer Doppelkammer für die Waschflüssigkeit,

Fig. 2 eine Doppelkammer für die Waschflüssigkeit mit einem Gegenstrom-Wärmetauscher zwischen den beiden Kammerteilen,

Fig. 3 eine Gegenstrom-Waschvorrichtung mit zwei räumlich getrennten Kammern für die Waschflüssigkeit,

Fig. 4 einen Überlauf mit Absaug-Heber für die Kammer mit der niedrigeren Temperatur und

Fig. 5 eine Kammer mit der niedrigeren Temperatur mit einer Luftstromkühlung für die Waschflüssigkeit.

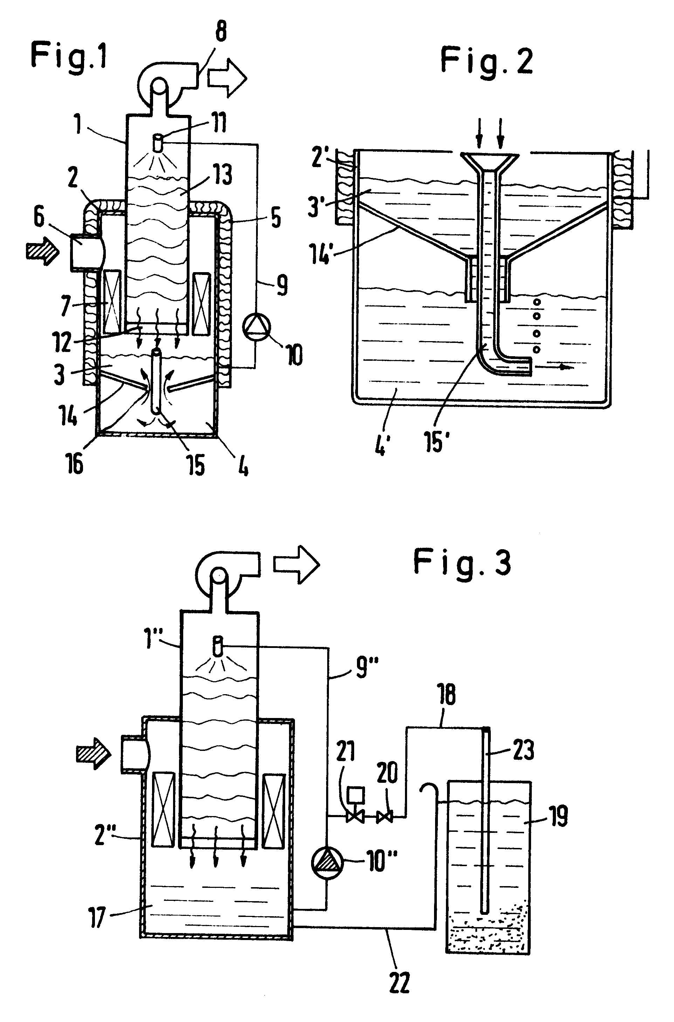

Die Gegenstom-Waschvorrichtung nach Fig. 1 weist ein beiderseitig offenes Kernrohr 1 und ein dessen unteren Teil umgebendes Mantelrohr 2 auf. Das Mantelrohr 2 ist oben geschlossen und bildet im unteren Teil eine obere Kammer 3, die die Waschflüssigkeit mit der höheren Temperatur aufnimmt, sowie eine untere Kammer 4 zur Aufnahme der Waschflüssigkeit mit der niedrigeren Temperatur. Der obere Teil des Mantelrohres 2 ist bis zur Trennwand zwischen den Kammern 3 und 4 mit einer Wärmedämmschicht 5 überzogen.

Die heißen zu reinigenden Gase werden durch einen Einlaß 6 in den oberen Teil des Mantelrohrs 2 eingeführt. Sie strömen dann zwischen Kernrohr 1 und Mantelrohr 2 durch einen Wärmetauscher 7 nach unten, wo sie oberhalb der in der Kammer 3 befindlichen Waschflüssigkeit um 180° umgelenkt werden und durch das Kernrohr 1 nach oben strömen. Am Auslaß 8 werden sie ins Freie abgelassen oder einer anderweitigen Verwendung zugeführt.

Über eine Leitung 9 wird mit Hilfe einer Dosierpumpe 10 Waschflüssigkeit aus der oberen Kammer 3 entnommen und im oberen Teil des Kernrohrs 1 durch eine Sprühdüse 11 versprüht. Im Kernrohr 1 ist eine aus beliebigen Kontaktkörpern gebildete, auf einem Tragrost 12 ruhende Säule 13 angeordnet. Die Waschflüssigkeit rieselt somit im Kernrohr 1 im Gegenstrom zu den aufsteigenden Gasen herab und in der Waschflüssigkeit beispielsweise enthaltenes Ammoniak reagiert mit in den Gasen enthaltenen Schwefeldioxyd unter Bildung von Ammoniumsulfat. Durch die Dosierpumpe 10 wird auch der pH-Wert der Waschflüssigkeit geregelt, so daß diese stets einen ausreichenden Gehalt an Ammoniak aufweist.

Die Kammern 3 und 4 sind durch ein Trennblech 14 voneinander getrennt. Dieses weist in der Mitte eine Öffnung auf, durch die ein Standrohr 15 unter Bildung eines ringförmigen Spaltes 16 hindurchgeführt ist. Das Standrohr 15 ragt mit seinem oberen offenen Ende über den Waschflüssigkeitsspiegel in der oberen Kammer 3 hinaus. Ein Teil der aus dem Kernrohr 1 herabrieselnden Waschflüssigkeit gelangt somit in die obere Kammer 3, während der restliche Teil vom Standrohr 15 aufgefangen und durch sein unteres offenes Ende in die untere Kammer 4 geleitet wird. Das Verhältnis dieser beiden Flüssigkeitsanteile kann durch einen auf das obere Ende des Standrohrs 15 aufgesetzten Trichter in gewünschter Weise eingestellt werden.

Die auch nach Durchströmen des Wärmetauschers 7 noch relativ heißen Gase erwärmen die im Kernrohr 1 herabrieselnde Waschflüssigkeit. Die von der Kammer 3 aufgenommene Waschflüssigkeit kühlt sich dabei kaum ab, da diese Kammer durch die Wärmedämmschicht 5 wärmeisoliert ist. Die untere Kammer 4 hingegen ist gegen die Umgebung nicht wärmeisoliert, so daß die darin befindliche, über das Standrohr 15 zugeführte Waschflüssigkeit durch die Umgebungsluft abgekühlt wird. Es bildet sich daher ein Temperaturunterschied zwischen der Waschflüssigkeit in der Kammer 3 und der Waschflüssigkeit in der Kammer 4 aus. Hat die aus dem Kernrohr 1 herausrieselnde Waschflüssigkeit eine relativ hohe Salzkonzentration, so wird eine Kristallisation dieser Salze stets nur in der kühleren unteren Kammer 4 erfolgen. Die Konzentration der in der Waschflüssigkeit gelösten Salze nimmt daher in der Kammer 4 ab, während sich die Kristalle am Boden dieser Kammer absetzen und in geeigneter Weise entfernt werden. Durch die Nachlieferung der Waschflüssigkeit durch das Standrohr 15 strömt Waschflüssigkeit mit einer geringeren Salzkonzentration durch den Spalt 16 aus der Kammer 4 in die Kammer 3, so daß in dieser die Salzkonzentration der Waschflüssigkeit entsprechend herabgesetzt wird.

Auf diese Weise kann sichergestellt werden, daß die zirkulierende Waschflüssigkeit, die stets der wärmeren Kammer entnommen wird, die Kristallisationsgrenze der gelösten Salze nicht erreicht. Die durch den relativ engen Spalt 16 in die Kammer 3 strömende Waschflüssigkeit wird von der im Standrohr 15 nach unten strömenden Flüssigkeit erwärmt, so daß die aus der Kammer 4 in die Kammer 3 fließende Flüssigkeit in der Kammer 3 eine merkliche Abnahme der Salzkonzentration, jedoch nur eine praktisch vernachlässigbare Temperatursenkung bewirkt.

Fig. 2 zeigt eine gegenüber der nach Fig. 1 abgewandelte Vorrichtung, wobei nur der die Abwandlung betreffende Teil der Vorrichtung dargestellt ist. Das Trennblech 14' zwischen den beiden Kammern 3' und 4' im unteren Teil des Mantelrohrs 2' ist im mittleren Teil rohrförmig ausgebildet, so daß der Übergang zwischen den Kammern 3' und 4' durch zwei konzentrische Rohre, nämlich das Standrohr 15' und den hierzu parallel verlaufenden Teil des Trennblechs 14' gebildet wird. Hierdurch entsteht ein wärmedämmendes Gaspolster zwischen der Waschflüssigkeit in der Kammer 3' und der Waschflüssigkeit in der Kammer 4'. Darüber hinaus wird der Wärmetausch zwischen der in die Kammer 4' einströmenden und der aus dieser Kammer ausströmenden Waschflüssigkeit erheblich erhöht, so daß die aus der Kammer 4' in die Kammer 3' gelangende Waschflüssigkeit nahezu die gleiche Temperatur besitzt wie die in der Kammer 3' befindliche Waschflüssigkeit.

Die Waschvorrichtung nach Fig. 1 ist durch ihren gedrängten Aufbau insbesondere für kleinere Anlagen geeignet, während die Waschvorrichtung nach Fig. 3 bei größeren Anlagen eingesetzt wird. Hier sind die beiden die Waschflüssigkeit enthaltenden Kammern räumlich voneinander getrennt. Die Waschvorrichtung entspricht derjenigen nach Fig. 1 mit Ausnahme der Ausbildung der beiden Kammern. Der untere Teil des Mantelrohrs 2" bildet eine einzige Kammer 17, die die gesamte aus dem Kernrohr 1" nach unten rieselnde Flüssigkeit aufnimmt. Die Kammer 17 ist vorzugsweise wärmeisoliert. Durch Einwirkung der Dosierpumpe 10" wird über die Leitung 9" Waschflüssigkeit aus der Kammer 17 herausgepumpt und im oberen Teil des Kernrohrs 1" versprüht. Von der Leitung 9" zweigt stromabwärts von der Dosierpumpe 10" eine Leitung 18 ab, die zu einer Kammer 19 führt. In der Leitung 18 befinden sich ein Drosselventil 20 und ein Magnetventil 21, durch die die Durchflußmenge der Waschflüssigkeit in der Leitung 18 gesteuert werden kann. Das Magnetventil 21 wird bei geringen Durchflußmengen zusätzlich zum Drosselventil 20 eingesetzt, um zu kleine Drosselquerschnitte, die zu einer Verstopfung führen könnten, zu vermeiden.

Die Kammer 19 ist immer mit Waschflüssigkeit gefüllt. Sie ist gegenüber der Umgebung nicht wärmeisoliert, so daß sich die Waschflüssigkeit in ihr abkühlt. Diese Kühlwirkung kann erforderlichenfalls durch zusätzliche Kühleinrichtungen in der Kammer 19 unterstützt werden. Durch die Abkühlung der Waschflüssigkeit in der Kammer 19 findet bei einer ausreichend hohen Salzkonzentration eine Kristallisation statt, wobei sich die Kristalle am Boden der Kammer 19 absetzen und in geeigneter Weise entfernt werden. Die gekühlte und gegebenenfalls teilentsalzte Waschflüssigkeit gelangt über einen Überlauf und eine Leitung 22 wieder in die Kammer 17. Die Salzkonzentration der Waschflüssigkeit in dieser Kammer 17 wird hierdurch herabgesetzt. Die Waschflüssigkeit kann gegebenenfalls beim Durchfließen der Leitung 22 erwärmt werden, damit die Temperatur in der Kammer 17 nicht zu stark absinkt, da hierdurch die Lösungsfähigkeit der Flüssigkeit beeinträchtigt wird.

Durch ein mit der Leitung 18 verbundenes, in die Kammer 19 eintauchendes Rohr 23 wird erreicht, daß der Zulauf und der Ablauf der Waschflüssigkeit in der Kammer 19 möglichst weit auseinanderliegen. Hierdurch ist gewährleistet, daß am Überlauf stets die niedrigste Salzkonzentration herrscht.

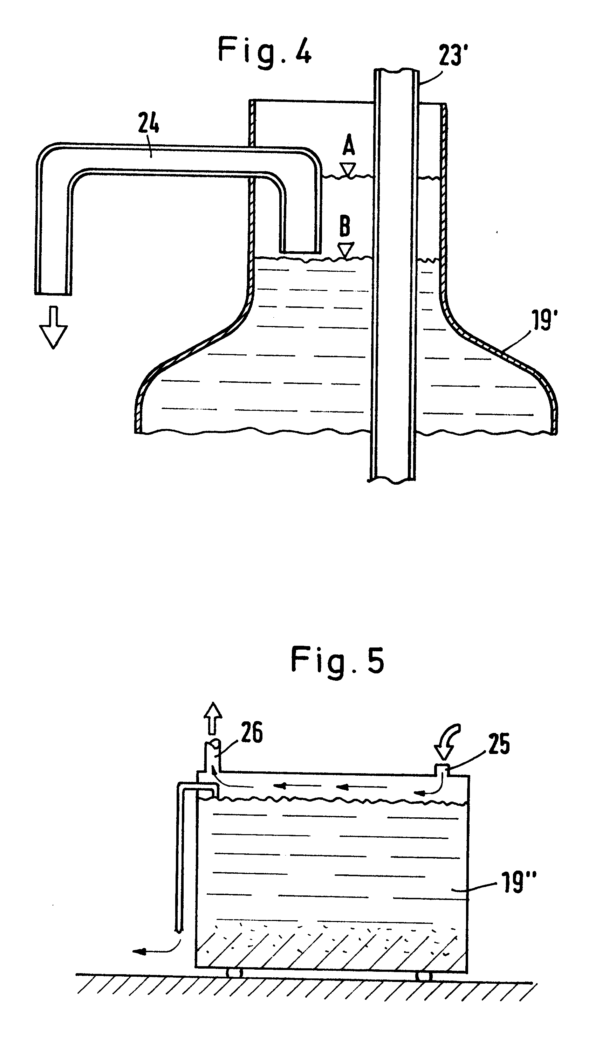

Fig. 4 zeigt eine besondere Ausbildung des Überlaufs bei der die abgekühlte Waschflüssigkeit aufnehmenden Kammer 19'. Die überlaufende Waschflüssigkeit fließt durch ein Rohr 24, das innerhalb der Kammer 19' einen senkrecht verlaufenden, unten offenen Schenkel aufweist. Wenn der Flüssigkeitsspiegel den Pegel A erreicht hat, beginnt der Überlauf, der sich durch Absaugung der Flüssigkeit solange fortsetzt, bis der Flüssigkeitsspiegel auf den Pegel B abgesunken ist. Durch diesen an sich bekannten Überlauf mit Absaug-Heber erfolgt die Flüssigkeitsentnahme nicht kontinuierlich wie bei der Vorrichtung nach Fig. 3, sondern diskontinuierlich, wodurch die Verschmutzungsgefahr in der angeschlossenen Leitung 22 vermindert wird.

Fig. 5 zeigt eine weitere Ausbildung der die abgekühlte bzw. abzukühlende Waschflüssigkeit aufnehmenden Kammer 19". Die Kühlwirkung wird hier durch einen Luftstrom verstärkt, der durch einen Einlaß 25 zu- und einen Auslaß 26 abgeführt wird. Der durch ein nicht gezeigtes Gebläse außerhalb der Kammer 19" erzeugte Luftstrom streicht an der Oberfläche der Flüssigkeit entlang und entzieht dieser dabei durch Konvektion und Verdunstung Wärme. Als Gebläse kann hierbei dasjenige der Wascheinrichtung selbst mitverwendet werden, das neben den zu reinigenden bzw. bereits gereinigten Gasen auch die Kühlluft ansaugt.

Es kann empfehlenswert sein, in der die kühlere Waschflüssigkeit aufnehmenden Kammer eine Rühreinrichtung vorzusehen, um bereits abgesetzte Salzkristalle aufzuwirbeln, damit diese Kristallisationskeime bilden und so die Kristallisation erleichtern. Auch wird auf diese Weise vermieden, daß sich Kristallblöcke bilden, so daß die Einzelkristalle zusammen mit der Flüssigkeit gut absaugbar bleiben. Es ist dann jedoch darauf zu achten, daß die Aufwirbelung der Kristalle nicht ein so starkes Maß erreicht, daß sie über den Überlauf oder dergleichen in die Kammer mit der wärmeren Waschflüssigkeit gelangen.

## Patentansprüche

1. Vorrichtung zum Waschen von mit Verunreinigungen belasteten Gasen, bei der die bei der Wäsche entstehenden Salze in der Waschflüssigkeit gelöst sind, die in einem Kreislauf durch die Vorrichtung geführt wird, **dadurch gekennzeichnet,** daß zwei miteinander verbundene Kammern(3,4; 17,19) vorgesehen sind, in denen die Waschflüssigkeit unterschiedliche Temperaturen besitzt, daß ein regelmäßiger Austausch der Waschflüssigkeit zwischen den beiden Kammern zumindest derart, daß die von der Kammer (4;19) mit der niedrigeren Temperatur abgegebene Waschflüssigkeit der Waschflüssigkeit mit der höheren Temperatur zugemischt wird, durchführbar ist, und daß die die Waschflüssigkeit mit der höheren Temperatur enthaltende Kammer (3;17) direkt in den Kreislauf eingefügt ist.

2. Vorrichtung nach Anspruch1,dadurch gekennzeichnet, daß die die Waschflüssigkeit mit der höheren Temperatur enthaltende Kammer (3) gegen die Umgebung wärmeisoliert und die die Waschflüssigkeit mit der niedrigeren Temperatur enthaltende Kammer (4) nicht wärmeisoliert sind.

3. Vorrichtung nach Anspruch 1 oder 2, dadurch gekennzeichnet, daß die die Waschflüssigkeit mit der niedrigeren Temperatur enthaltende Kammer (4,19) mit einer Kühlvorrichtung versehen ist.

4. Vorrichtung nach Anspruch 3, dadurch gekennzeichnet, daß die Waschflüssigkeit in der Kammer (19") mit der niedrigeren Temperatur der Einwirkung eines Kühlluftstromes ausgesetzt ist.

5. Vorrichtung nach Anspruch 4, dadurch gekennzeichnet, daß der Kühlluftstrom durch das Saugzuggebläse der Wascheinrichtung erzeugbar ist.

6. Vorrichtung nach einem der Ansprüche 1 bis 5. dadurch gekennzeichnet, daß der Einlaß der die Waschflüssigkeit mit der niedrigeren Temperatur enthaltenden Kammer (4) an den Kreislauf zur Aufnahme mindestens eines Teils der zirkulierenden Waschflüssigkeit angeschlossen und der Auslaß dieser Kammer (4) mit der die Waschflüssigkeit mit der höheren Temperatur enthaltenden Kammer (3) verbunden sind.

7. Vorrichtung nach einem der Ansprüche 1 bis 6, dadurch gekennzeichnet, daß der Einlaß und der Auslaß der die Waschflüssigkeit mit der niedrigeren Temperatur enthaltenden Kammer (4') durch zwei konzentrische Rohre (14',15') gebildet sind, die einen Gegenstrom-Wärmetauscher darstellen.

8. Vorrichtung nach einem der Ansprüche 1 bis 7, dadurch gekennzeichnet, daß zwischen der die Waschflüssigkeit mit der höheren Temperatur enthaltenden Kammer (3') und der die Waschflüssigkeit mit der niedrigeren Temperatur enthaltenden Kammer (4') ein wärmeisolierendes Gaspolster gebildet ist.

9. Vorrichtung nach einem der Ansprüche 1 bis 4. dadurch gekennzeichnet, daß der Einlaß und der Auslaß der die Waschflüssigkeit mit der niedrigeren Temperatur enthaltenden Kammer (19) mit einem Auslaß und einem Einlaß der die Waschflüssigkeit mit der höheren Temperatur enthaltenden Kammer (17) verbunden sind.

10. Vorrichtung nach Anspruch 8, dadurch gekennzeichnet, daß in den Verbindungen zwischen den beiden Kammern (17,19) eine Pumpe (10") und die durchströmende Waschflüssigkeitsmenge regulierende Ventile (20,21) angeordnet sind.

11. Vorrichtung nach Anspruch 8 oder 9, dadurch gekennzeichnet, daß der Einlaß der die Waschflüssigkeit mit der höheren Temperatur enthaltenden Kammer (17) mit einem Überlauf der die Waschflüssigkeit mit der niedrigeren Temperatur enthaltenden Kammer (19) verbunden ist.

12. Vorrichtung nach Anspruch 10, dadurch gekennzeichnet. daß der Überlauf mit einem Absaug-Heber (24) versehen ist.

13. Vorrichtung nach einem der Ansprüche 1 bis 11, dadurch gekennzeichnet, daß die die Waschflüssigkeit mit der niedrigeren Temperatur enthaltende Kammer mit einer Rühreinrichtung versehen ist.

14. Vorrichtung nach einem der Ansprüche 1 bis 12, dadurch gekennzeichnet, daß eine Rückführung der mit Salzkristallen aus der Kammer mit der niedrigeren Temperatur entnommenen Waschflüssigkeit nach Befreiung von den Salzkristallen in den Kreislauf vorgese-hen ist.

Fig.1

Fig.2

Fig.3

Fig. 4

A

B

24

23'

19'

Fig. 5

26

25

19"

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 195 945 (GESELLSCHAFT FÜR CHEMISCHE INDUSTRIE IN BASEL) * Insgesamt * | 1,3,9 | B 01 D 53/34 B 01 D 47/02 B 01 D 47/06 |
| A | DE-A-3 023 812 (HEAT EXTRACTOR CORP.) * Ansprüche 1-3,7; Seiten 17-19; Figur 1 * | 1,3,4, 9 | |
| A | US-A-2 811 424 (J. VAN ACKEREN) | | |

| RECHERCHIERTE SACHGEBIETE (Int. Cl.4) |
|---|
| B 01 D 53/00 B 01 D 47/00 |

Der vorliegende Recherchenbericht wurde für alle Patentansprüche erstellt.

| Recherchenort | Abschlußdatum der Recherche | Prüfer |
|---|---|---|
| DEN HAAG | 21-11-1986 | POLESAK, H.F. |